# EUROPEAN PATENT APPLICATION

(11) **EP 4 518 330 A1**
(43) Date of publication of application: **05.03.2025**
(21) Application number: 22940337.3
(22) Date of filing: 29.04.2022
(51) Int. Cl.: H04N 21/436, H04N 21/4363, H04N 21/431, H04N 21/422, H04N 21/45

(54) **DISPLAY DEVICE**

(71) Applicant: LG Electronics Inc., Yeongdeungpo-gu Seoul 07336 (KR)
(72) Inventor: PARK, Kiwon, Seoul 06772 (KR); LEE, Jaekyung, Seoul 06772 (KR)
(74) Representative: Frenkel, Matthias Alexander
(86) International application number: PCT/KR2022/006156
(87) International publication number: WO 2023/210843

(57) **Abstract**

A display device according to an embodiment of the present invention comprises: a wireless communication interface which transmits and receives signals to and from at least one peripheral device; a controller which acquires position information of the peripheral device; and a display which displays a home map in which the peripheral device is arranged in a plan view on the basis of the position information of the peripheral device. Upon receiving a control command for the at least one peripheral device displayed on the home map, the controller transmits a control signal to the peripheral device so that the peripheral device operates according to the control command.

## Description

### [Technical Field]

The present disclosure relates to a display device, and more particularly, to a display device configured to perform setup and control of an IoT device.

### [Background Art]

The Internet of Things (IoT) era is opening due to a development of wireless communication technology and an increase in wireless communication devices. The Internet of Things refers to a technology or an environment that exchanges data in real time via sensors installed in objects.

Home IoT is being implemented along with the Internet of Things era, and Home IoT is a word that combines smart home and Internet of Things (IoT), and refers to a platform that collects and exchanges information by connecting mobile devices, home appliances, etc. via the Internet and communication. Through Home IoT, it is possible to control home appliances inside a house using smart devices outside the house.

As described above, in order to control home appliances with smart devices, users have been manually setting and changing the names, types, etc. of home appliances in the house. However, in this case, if there are multiple identical home appliances, it is difficult to know where each home appliance is positioned, and if the position of the home appliance changes, it is inconvenient to have to change it one by one.

In addition, if a user staying in a specific space is using an appliance placed in that space, there is a problem that if another user outside remotely controls the appliance in that space, it causes inconvenience to the user who is using it.

### [Disclosure]

### [Technical Problem]

A purpose of this present disclosure is to provide a display device that can easily set and control various peripheral devices placed in a space.

The purpose of this present disclosure is to provide a display device that minimizes inconvenience experienced by a user using the space due to remote control by another user.

### [Technical Solution]

A display device according to an embodiment of present disclosure comprises a wireless communication interface configured to transmit and receive signals with at least one peripheral device, a controller configured to obtain position information of the peripheral device, and a display configured to display a home map in which peripheral devices are arranged on a floor plan based on the position information of the peripheral device, wherein the controller is configured to when receiving a control command for at least one peripheral device displayed on the home map, transmit a control signal to the peripheral device to operate according to the control command.

The controller is configured to, when receiving a do-not-disturb setting command for a first peripheral device from a first user terminal, set the first peripheral device to a do-not-disturb mode controlled only by the first user terminal.

The first peripheral device is displayed with a controllable icon on a home map displayed on the first user terminal, and the first peripheral device is displayed with an uncontrollable icon on the home map displayed on a second user terminal.

The display device further comprises a microphone for obtaining a voice command for setting a do-not-disturb, and the controller is configured to detect a user terminal when receiving the voice command for setting the do-not-disturb, and set a first peripheral device located in a first area where a first user terminal is located to a do-not-disturb mode when the first user terminal is detected.

The first peripheral device is displayed with a controllable icon on a home map displayed on the first user terminal and a user terminal located in the first area, and the first peripheral device is displayed with an uncontrollable icon on a home map displayed on a user terminal located in a second area.

The controller is configured to release the do-not-disturb mode setting for the first peripheral device when detecting departure of the first user terminal from the first area.

The controller is configured to, when a home address is entered, a floor plan corresponding to the entered home address is obtained, and obtain the home map based on the floor plan corresponding to the obtained home address.

The controller is configured to display a plurality of floor plans, and when receiving a command to select at least one of the displayed plurality of floor plans, obtain the home map based on the selected floor plan.

The controller is configured to obtain position information of the peripheral device through ultra-wideband (UWB) communication.

The controller is configured to detect a movement of a position of the peripheral device through the ultra-wideband communication, and when the movement of the position of the peripheral device is detected, display the home map by changing the position of the peripheral device on the floor plan according to the detected movement of the position.

The controller is configured to receive an input that sets at least one of type or position of the peripheral device on the floor plan.

The controller is configured to obtain names of each space distinguished on the floor plan.

The controller is configured to change a name of the space based on a position movement of at least one user terminal.

The controller is configured to obtain a name of the space based on a time each of a plurality of user terminals stayed in each space distinguished on the floor plan.

The controller is configured to set a name of a first space to a name of a first user if a first user terminal stays in the first space for a predetermined time or longer, and, if a control command including the name of the first user and a type of device is received, transmit a control signal to a peripheral device corresponding to the type of device placed in the first space.

### [Advantageous Effects]

According to an embodiment of the present disclosure, since the display device provides a home map in which peripheral devices are arranged on a floor plan showing a structure of a house, there is an advantage in that the user who wants to perform remote control has improved recognition of each peripheral device, and thus, remote control becomes easier.

According to an embodiment of the present disclosure, since a home map displayed on a floor plan is generated based on the position information of the peripheral device obtained through ultra-wideband communication, the inconvenience of the user having to manually set the position or name of each peripheral device is minimized, and thus, user convenience is improved.

According to an embodiment of the present disclosure, the do-not-disturb mode can be set, and a controllable/uncontrollable icon is displayed based on the user terminal or position that has set the do-not-disturb mode, so that the inconvenience of being disturbed by other users is minimized, and there is an advantage in that it is easy to recognize whether the corresponding peripheral device can be remotely controlled.

### [Description of Drawings]

Fig. 1 is a block diagram illustrating a configuration of a display device according to an embodiment of the present disclosure.
Fig. 2 is a block diagram of a remote control device according to an embodiment of the present disclosure.
Fig. 3 shows an example of an actual configuration of a remote control device 200 according to an embodiment of the present disclosure.
Fig. 4 shows an example of utilizing a remote control device according to an embodiment of the present disclosure.
Fig. 5 is a flowchart illustrating an operation method of a display device according to an embodiment of the present disclosure.
Fig. 6 is a flowchart illustrating a method of obtaining a home map by a display device according to an embodiment of the present disclosure.
Fig. 7 is a diagram illustrating a method of obtaining a floor plan by a display device according to a first embodiment of the present disclosure.
Fig. 8 is a diagram illustrating a method of obtaining a floor plan by a display device according to a second embodiment of the present disclosure.
Fig. 9 is an exemplary diagram illustrating a home map generated by a display device according to a first embodiment of the present disclosure.
Fig. 10 is an exemplary diagram illustrating a home map generated by a display device according to a second embodiment of the present disclosure.
Fig. 11 is an exemplary diagram illustrating a home map generated by a display device according to a first embodiment of the present disclosure.
Fig. 12 is an exemplary diagram illustrating a home map generated by a display device according to a fourth embodiment of the present disclosure.
Fig. 13 is a diagram illustrating a method for a display device according to an embodiment of the present disclosure to display a home map changed according to a movement of a position of a peripheral device.
Fig. 14 is an exemplary diagram illustrating a home map displayed when a display device according to the present disclosure receives a do-not-disturb setting command from a first user terminal.
Fig. 15 is an example diagram showing a home map displayed to a second user when a do-not-disturb setting command is received by a first user terminal as shown in Fig. 14.
Fig. 17 is a diagram showing an implementation example of a controller according to an embodiment of the present disclosure.

### [Best Mode]

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

A display device according to an embodiment of the present disclosure is, for example, an intelligent display device in which a computer support function is added to a broadcast reception function, and may have an easy-to-use interface such as a handwritten input device, a touch screen, a spatial remote control, or the like since an Internet function is added while fulfilling the broadcast receiving function. In addition, it is connected to the Internet and a computer with the support of a wired or wireless Internet function, so that functions such as e-mail, web browsing, banking, or games can also be performed. A standardized general-purpose OS may be used for these various functions.

Accordingly, in the display device described in the present disclosure, various user-friendly functions can be performed because various applications can be freely added or deleted, for example, on a general-purpose OS kernel. More specifically, the display device may be, for example, a network TV, HBBTV, smart TV, LED TV, OLED TV, and the like, and may be applied to a smart phone in some cases.

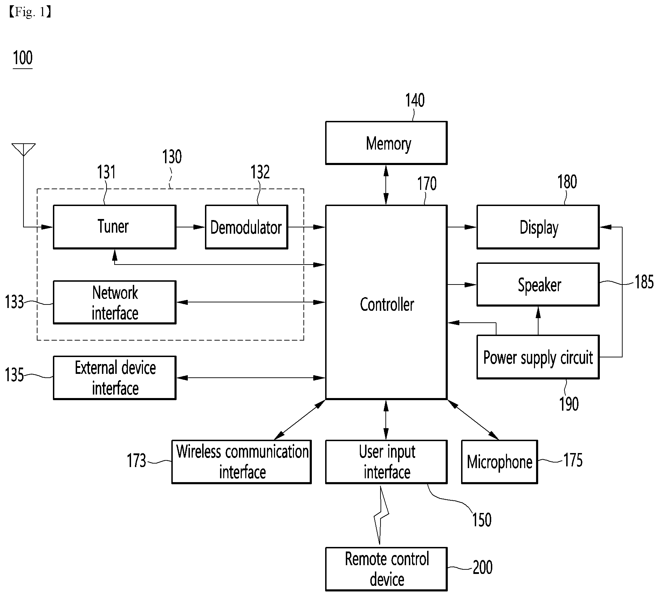

FIG. 1 is a block diagram showing a configuration of a display device according to an embodiment of the present disclosure.

Referring to FIG. 1, a display device 100 may include a broadcast receiver 130, an external device interface 135, a memory 140, a user input interface 150, a controller 170, a wireless communication interface 173, a microphone 175, a display 180, a speaker 185, and a power supply circuit 190.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a content provider or a network operator. That is, the network interface 133 may receive content such as movies, advertisements, games, VOD, and broadcast signals and information related thereto provided from a content provider or a network provider through a network.

In addition, the network interface 133 may receive update information and update files of firmware provided by the network operator, and may transmit data to an Internet or content provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The microphone 175 can acquire audio. The microphone 175 can acquire and recognize voices around the display device 100. The controller 170 can receive voice commands through the microphone 175.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play the same.

For example, the display device 100 may be divided into an image processing device, such as a set-top box, for receiving broadcast signals or content according to various network services, and a content playback device that plays content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 and the speaker 185.

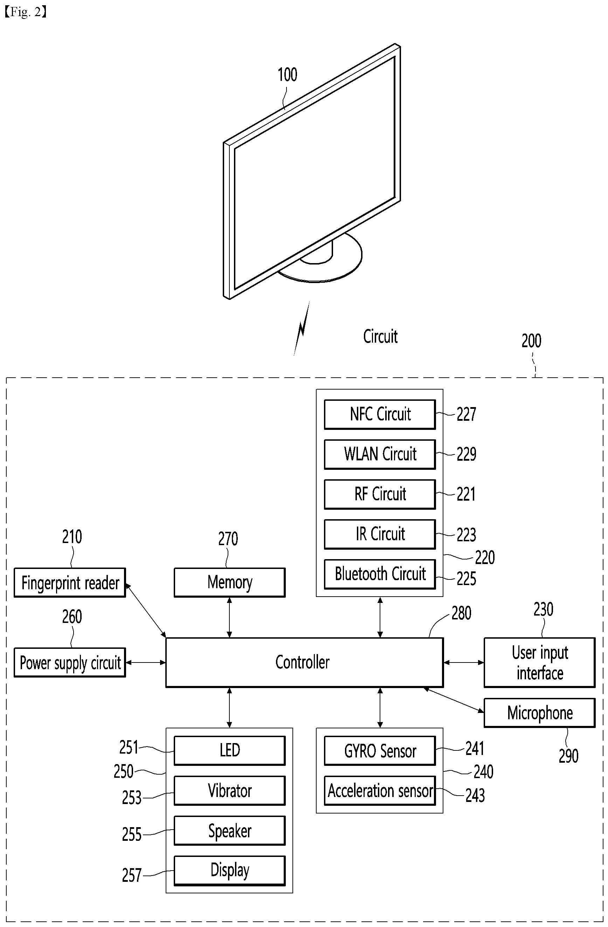

Next, a remote control device according to an embodiment of the present disclosure will be described with reference to FIGS. 2 to 3.

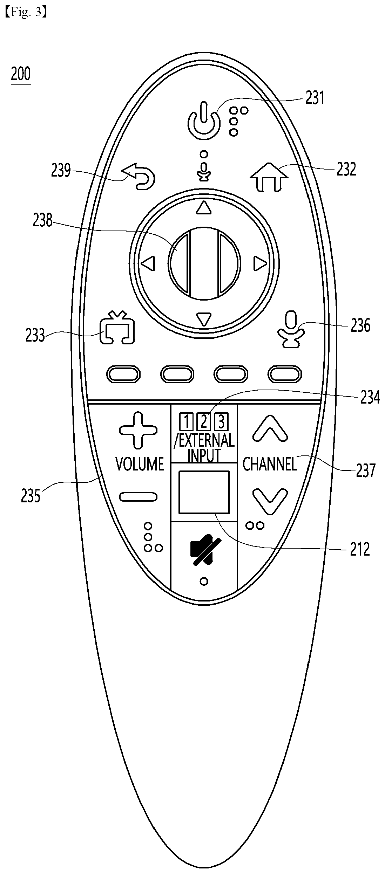

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation.

The power button 231 may be a button for turning on/off the power of the display device 100.

The home button 232 may be a button for moving to the home screen of the display device 100.

The live button 233 may be a button for displaying a real-time broadcast program.

The external input button 234 may be a button for receiving an external input connected to the display device 100.

The volume control button 235 may be a button for adjusting the level of the volume output by the display device 100.

The voice recognition button 236 may be a button for receiving a user's voice and recognizing the received voice.

The channel change button 237 may be a button for receiving a broadcast signal of a specific broadcast channel.

The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100.

The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication interface 225.

In addition, the power supply circuit 260 may supply power to the remote control device 200, and stop power supply when the remote control device 200 has not moved for a predetermined time to reduce power consumption.

The power supply circuit 260 may restart power supply when a predetermined key provided in the remote control device 200 is operated.

The memory 270 may store various types of programs and application data required for control or operation of the remote control device 200.

When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 235 or a signal corresponding to the movement of the remote control device 200 sensed by the sensor 240 through the wireless communication interface 225.

Also, the microphone 290 of the remote control device 200 may obtain a speech.

A plurality of microphones 290 may be provided.

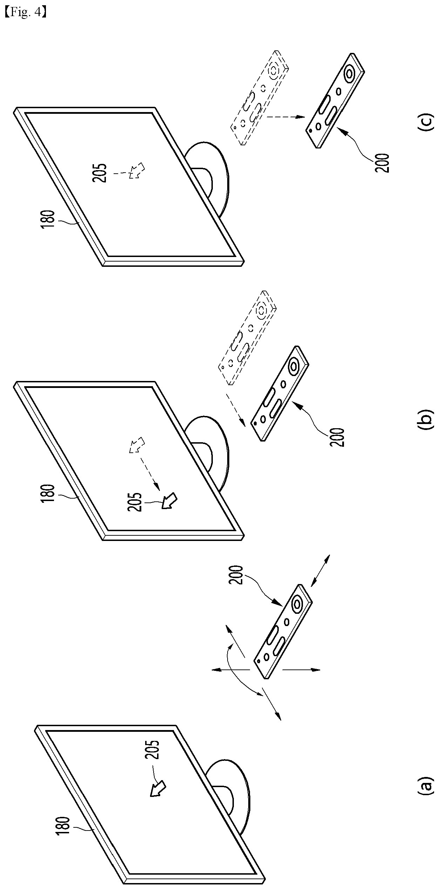

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

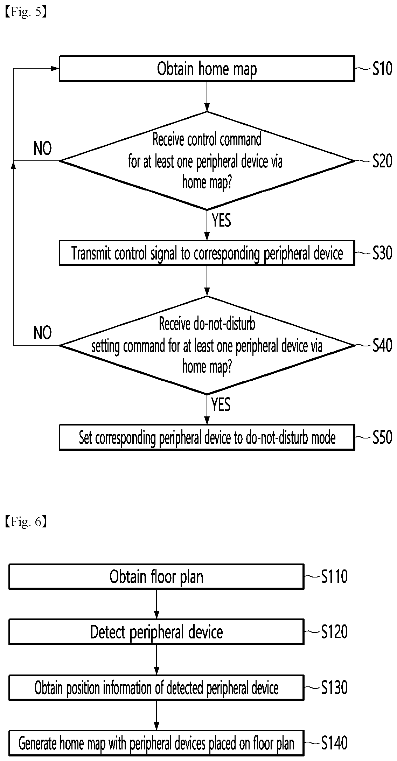

Fig. 5 is a flowchart illustrating an operation method of a display device according to an embodiment of the present disclosure.

The controller 170 can obtain a home map S10.

The home map may mean a map showing home appliances for remotely controlling IoT (Internet of Things) devices. In other words, the home map may mean a map showing a structure of a house where a user resides and home appliances placed therein. Meanwhile, in this specification, the home map is described as an example for convenience of explanation, but the display device 100 may also obtain maps for various living areas, such as an office map.

The home map may be a drawing showing a placement of peripheral devices on a floor plan based on position information of peripheral devices obtained through a wireless communication interface 173.

Next, a method for obtaining a home map will be described in detail with reference to Fig. 6.

Fig. 6 is a flowchart showing a method for obtaining a home map by a display device according to an embodiment of the present disclosure.

The controller 170 can obtain a floor plan S110.

The floor plan can be a drawing drawn as a house seen from above. The floor plan can include the structure of the house. The floor plan can include information such as the position and area of each space separated in the house.

There can be various ways for the controller 170 to obtain the floor plan.

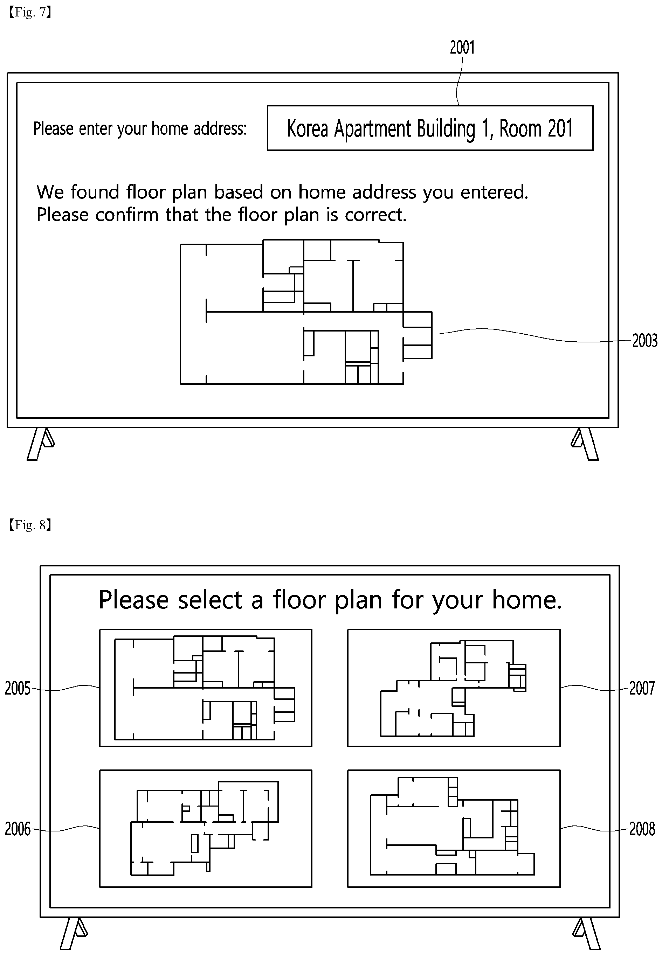

Fig. 7 is a drawing explaining a method for a display device according to the first embodiment of the present disclosure to obtain a floor plan.

According to the first embodiment, the controller 170 can obtain a floor plan by receiving a user's home address. As in the example of Fig. 7, the controller 170 can control the display 180 to display an input window 2001 for receiving a user's home address.

When the controller 170 receives a home address through the input window 2001, the controller 170 can obtain a floor plan corresponding to the input home address. For example, the controller 170 can obtain a floor plan by receiving a floor plan corresponding to a home address from a floor plan platform (e.g., a real estate-related platform).

When the controller 170 obtains a floor plan, the controller 170 can display the obtained floor plan 2003 on the display 180. While displaying floor plan 2003, the controller 170 can additionally display a message confirming whether the displayed floor plan corresponds to the floor plan corresponding to the user's home. In this case, when the controller 170 receives an input signal confirming that the displayed floor plan corresponds to the floor plan corresponding to the user's home, it can determine the corresponding floor plan as the floor plan corresponding to the user's home address.

When the controller 170 obtains a floor plan corresponding to the input home address, it can obtain a home map based on the floor plan corresponding to the obtained home address.

Meanwhile, if the displayed floor plan 2003 is not the floor plan corresponding to the user's house, the controller 170 can transmit a signal to request a floor plan again to the floor plan platform, etc. Alternatively, if the displayed floor plan 2003 is not the floor plan corresponding to the user's house, the controller 170 can have the user select a floor plan in the manner described in Fig. 8 below.

Fig. 8 is a drawing explaining a method for a display device according to a second embodiment of the present disclosure to obtain a floor plan.

According to the second embodiment, the controller 170 can obtain a floor plan by receiving an input for selecting at least one of a plurality of floor plans. As in the example of Fig. 8, the controller 170 can display a plurality of floor plans 2005 2006 2007 2008. The plurality of floor plans 2005 2006 2007 2008 may be floor plans stored in the memory 140. Alternatively, the plurality of floor plans 2005 2006 2007 2008 may be floor plans received from a floor plan platform, etc.

The controller 170 can receive a command for selecting one of the plurality of floor plans 2005 2006 2007 2008 through a pointer 203, etc. That is, when the plurality of floor plans 2005 2006 2007 2008 are displayed on the display 180, the user can select a floor plan corresponding to his/her home among the plurality of floor plans 2005 2006 2007 2008.

The controller 170 can obtain a home map based on the selected floor plan according to the user command.

As described above, the display device 100 according to the embodiment of the present disclosure can obtain a floor plan in various ways.

Again, Fig. 6 will be described.

The controller 170 can detect a peripheral device S120, and obtain position information of the detected peripheral device S130.

The peripheral device may refer to various home appliances placed in the house. For example, the peripheral device may include a TV, an air conditioner, a refrigerator, a washing machine, a dryer, a vacuum cleaner, a robot vacuum cleaner, a clothes manager, etc.

In addition, the peripheral device may further include various electronic devices that can be remotely controlled by wireless communication in addition to the home appliance, and as an example, the peripheral device may further include a light.

The method by which the controller 170 detects the peripheral device may vary. According to one embodiment, the controller 170 may set a specific peripheral device as a reference and detect the remaining peripheral devices. For example, the controller 170 may set the display device 100 itself as a reference and detect the remaining peripheral devices.

The controller 170 may identify the position information or device type information of the peripheral device through ultra-wideband (UWB) communication or Bluetooth communication. For example, the controller 170 can obtain at least one of position information and device type information of the peripheral device through ultra-wideband communication.

The ultra-wideband communication is a short-range wireless communication technology that transmits a large amount of information with low power over a wide band compared to existing frequency bands, and is a technology that can measure the distance and position between devices.

Meanwhile, the controller 170 can receive an input that sets at least one of the type or position of the peripheral device on the floor plan, and can generate a home map in which the peripheral device is arranged based on the received input.

The controller 170 can generate a home map in which the peripheral device is arranged on the floor plan S140.

The controller 170 can generate a home map by arranging the peripheral device on the floor plan based on the position information of the peripheral device.

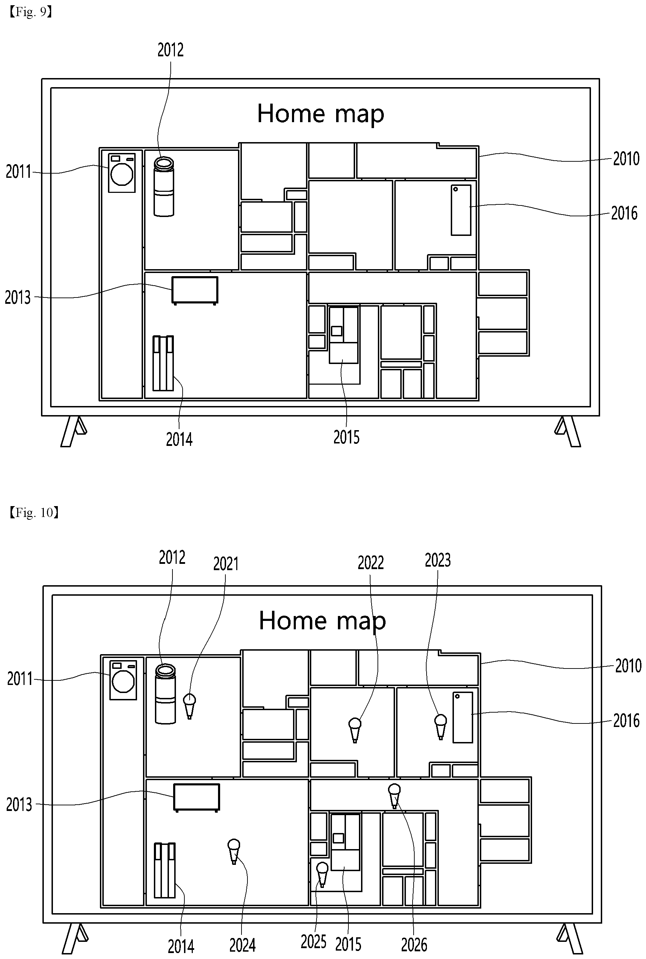

Next, referring to Figs. 9 to 12, a method for generating a home map by a display device according to various embodiments of the present disclosure will be described.

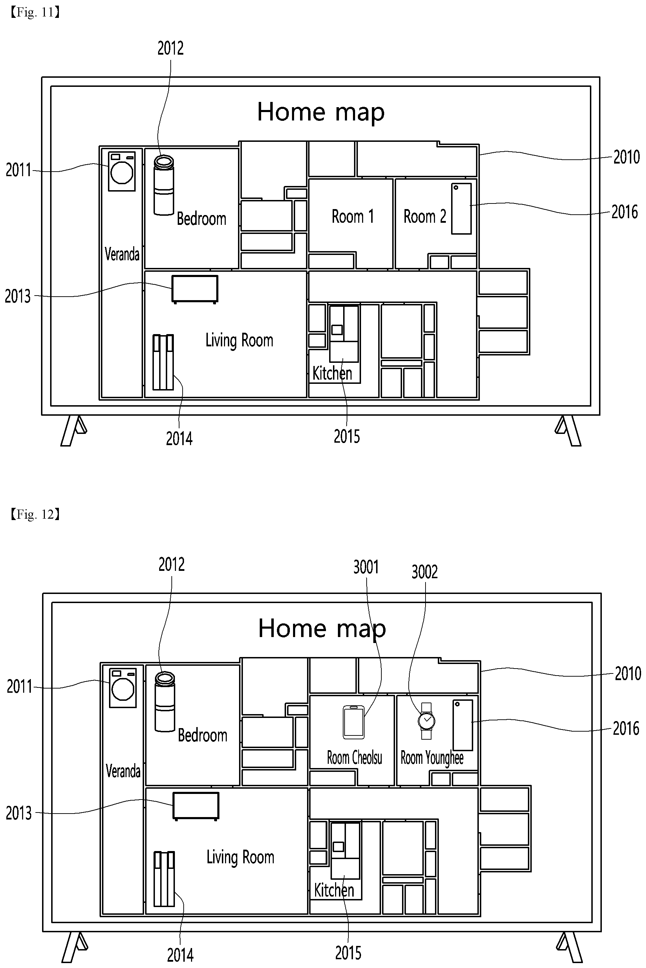

Fig. 9 is an example drawing illustrating a home map generated by a display device according to a first embodiment of the present disclosure, Fig. 10 is an example drawing illustrating a home map generated by a display device according to a second embodiment of the present disclosure, Fig. 11 is an example drawing illustrating a home map generated by a display device according to a first embodiment of the present disclosure, and Fig. 12 is an example drawing illustrating a home map generated by a display device according to a fourth embodiment of the present disclosure.

According to the first embodiment, the controller 170 can generate a home map by arranging peripheral devices 201120122013 2014 2015 2016 on a floor plan 2010 based on position information of the peripheral devices. As illustrated in Fig. 9, in the first embodiment, peripheral devices 2011 2012 2013 2014 2015 2016 are illustrated as a washing machine, an air purifier, a TV, an air conditioner, a refrigerator, and a clothes manager, but this is merely exemplary. That is, according to the first embodiment, the controller 170 can generate a home map in which the positions of home appliances are illustrated on the floor plan.

According to the second embodiment, the controller 170 can generate a home map by arranging peripheral devices 2011 2012 2013 2014 2015 2016 2021 2022 2023 2024 2025 2026 on the floor plan 2010 based on the position information of the peripheral devices. As shown in Fig. 9, in the second embodiment, peripheral devices 2011 2012 2013 2014 2015 2016 are depicted as including a washing machine, an air purifier, a TV, an air conditioner, a refrigerator, a clothes manager, and lighting, but this is merely exemplary. That is, according to the second embodiment, the controller 170 can generate a home map in which the positions of not only home appliances but also lighting are depicted on the floor plan.

According to the third embodiment, the controller 170 can generate a home map by arranging peripheral devices 201120122013 2014 2015 2016 on the floor plan 2010 based on the position information of the peripheral devices, and obtaining names of each space distinguished on the floor plan 2010.

The controller 170 can automatically obtain the names of each space based on at least one of the house structure and the arrangement status of the peripheral devices. Referring to the example of Fig. 11, the controller 170 may obtain the name of the space where the washing machine 2011 is placed as "Veranda," obtain the name of the space where the air purifier 2012 is placed as "Bedroom," obtain the name of the space where the TV 2013 and the air conditioner 2014 are placed as "Living Room," obtain the name of the space where the refrigerator 2015 is placed as "Kitchen," and obtain the name of the space where the clothes manager 2016 is placed as "Room 2." And, in this case, the controller 170 may or may not obtain a name based on the structure and size of the space even in a space where no peripheral device is placed. In the example of Fig. 11, it has been described that the controller 170 obtains the name of the space positioned next to Room 2 as "Room 1," but this is merely an example and therefore, it is reasonable that the present invention is not limited thereto. That is, according to the third embodiment, the controller 170 can generate a home map including the positions of the peripheral devices and the names of each space on the floor plan.

According to the fourth embodiment, the controller 170 can generate a home map by arranging peripheral devices 2011 2012 2013 2014 2015 2016 on the floor plan 2010 based on the position information of the peripheral devices, and obtaining the names of each space distinguished on the floor plan 2010 based on the user terminal.

The controller 170 can automatically obtain the names of each space based on the user terminal based on at least one of the house structure and the arrangement status of the peripheral devices. Referring to the example of Fig. 12, the controller 170 can obtain the name of the space where the washing machine 2011 is placed as veranda, the name of the space where the air purifier 2012 is placed as bedroom, the name of the space where the TV 2013 and the air conditioner 2014 are placed as living room, the name of the space where the refrigerator 2015 is placed as kitchen, the name of the space where the first user terminal 3001 is positioned as first user room (e.g., room Cheolsu), and the name of the space where the second user terminal 3002 is positioned as second user room (e.g., room Younghee).

That is, according to the fourth embodiment, the controller 170 can obtain the name of at least one space based on at least one user terminal 3001 3002. Here, the user terminal 3001 3002 may include a smartphone, a tablet PC, a smart watch, wireless earphones, a wearable device, etc.

Specifically, the controller 170 may obtain a name of a space based on the time that each of the plurality of user terminals stayed in each space distinguished on the floor plan.

For example, if a time that the first user terminal 3001 stayed in the first space is longer than a predetermined time, the controller 170 may set the name of the first space to the name of the first user, and if the time that the second user terminal 3002 stayed in the second space is longer than a predetermined time, the controller 170 may set the name of the second space to the name of the second user. At this time, the predetermined time may be set in advance, for example, 5 hours, but this is only an example, and therefore, it is reasonable that it is not limited thereto. The controller 170 can set the name of the space as the user's name by receiving the user's name information from the user terminal when the time that a specific user terminal stays in a specific space is longer than a predetermined time.

In addition, the controller 170 can calculate the time that each user terminal stays in a specific space for each user terminal and for each space. In addition, when calculating the time that each user terminal stays in a specific space, the controller 170 can calculate the time that each user terminal stays in a specific space continuously or can calculate the time that each user terminal stays in a specific space by accumulating the time that each user terminal stays in the specific space.

As another example, the controller 170 can set the space where each user terminal stays for a preset time (e.g., bedtime) as the user name of the user terminal. Specifically, the controller 170 may set the name of the first space to the name of the first user when the first user terminal 3001 stays in the first space at a preset time (e.g., midnight), and may set the name of the second space to the name of the second user when the second user terminal 3002 stays in the second space at a preset time (e.g., midnight).

As another example, the controller 170 may change the name of each space in real time based on the position of the user terminal when moving in real time. Specifically, the controller 170 may set the name of the space where the air purifier 2012 is placed to room Cheolsu when the first user terminal 3001 is in the space where the air purifier 2012 is placed, and may set the name of the space where the TV 2013 is placed to room Cheolsu when the position of the first user terminal 3001 is changed to the space where the TV 2013 is placed.

As described above, the controller 170 can obtain the name of each space distinguished on the floor plan based on each user terminal.

In the third and fourth embodiments, when the controller 170 obtains the name of each space, generate a home map in which the peripheral device is placed and the name of each space is included. In addition, the controller 170 can change the name of the space based on the position movement of at least one user terminal. In addition, the controller 170 can receive a command to modify at least one name displayed on the home map. The controller 170 can also directly receive a name for at least one space distinguished on the home map from the user.

The controller 170 may regenerate a home map including the changed or modified name when receiving a command to change or modify the name of a space.

In addition, the controller 170 may detect a position movement of a peripheral device through ultra-wideband communication, and when the position movement of the peripheral device is detected, the controller 170 may display a home map by changing the position of the peripheral device on the floor plan according to the detected position movement.

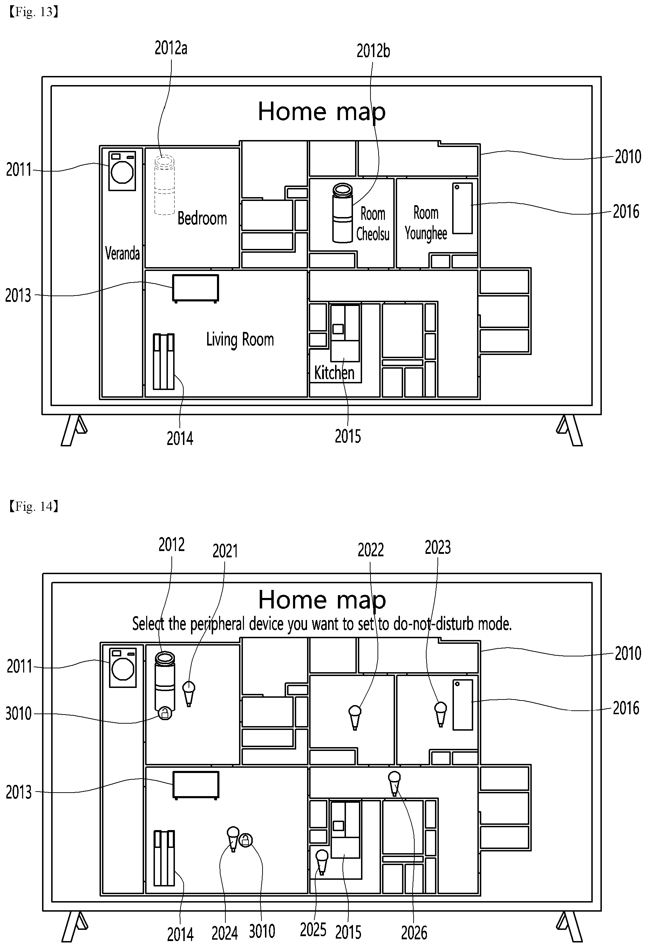

Fig. 13 is a diagram illustrating a method for a display device according to an embodiment of the present disclosure to display a home map changed according to the position movement of the peripheral device.

The controller 170 may detect a position movement of the peripheral device every preset period (e.g., once a week). Alternatively, the controller 170 may detect a position movement of the peripheral device every preset time (e.g., midnight). Alternatively, the controller 170 may detect a position movement of the peripheral device every time a command to display the home map is received. As described above, the controller 170 can detect the position movement of the peripheral device through the ultra-wideband communication at various times.

When the position movement of the peripheral device is detected, the controller 170 can display the home map by changing the position of the peripheral device on the floor plan according to the detected position movement. For example, as illustrated in Fig. 13, the controller 170 can display the position before change 2012a and the position after change 2012b of the peripheral device together, and the position before change 2012a and the position after change 2012b can be displayed differently. The controller 170 can display the peripheral device at the position before change 2012a with a dotted line and the peripheral device at the position after change 2012b with a solid line, but this is only an example and therefore it is reasonable that it is not limited thereto.

The controller 170 can display the position before change 2012a and the position after change 2012b together only once after the position movement of the peripheral device is detected, and thereafter, display the home map where the peripheral device is positioned at the position after change 2012b.

In this way, the display device 100 has the advantage of allowing the user to easily recognize whether or not there has been a change by displaying the position before change 2012a and the position after change 2012b together at least once after the position has been moved.

Again, Fig. 5 is described.

The controller 170 can obtain whether a control command is received for at least one peripheral device through the home map (S20).

The controller 170 can receive a control command through the home map displayed on at least one of the display 180 or the user terminal. For example, the controller 170 can receive a control command by selecting at least one peripheral device included in the home map displayed on at least one of the display 180 or the user terminal and then receiving an input for selecting a specific operation.

In addition, the controller 170 can also receive a control command through a voice command. For example, the controller 170 can receive a control command according to a voice recognized through at least one of the microphone 175, the microphone 290 equipped in the remote control device 200, or the microphone (not shown) equipped in the user terminal.

When the controller 170 receives a control command for at least one peripheral device displayed on the home map, the controller 170 can transmit a control signal to the peripheral device to operate according to the control command. Specifically, when the controller 170 receives a control command including the name of the first user and the type of device, the controller 170 can transmit a control signal to the peripheral device corresponding to the type of device placed in the first space. For example, when the name of the first space is set to room Younghee, the controller 170 can transmit a control signal to turn on the power of the clothing manager placed in room Younghee when receiving a voice command such as "Turn on the clothing manager in room Younghee."

The controller 170 can obtain whether a do-not-disturb setting command is received for at least one peripheral device through the home map S40.

The do-not-disturb setting command may mean a command that sets at least one peripheral device so that it cannot be controlled by another user.

When the controller 170 receives a do-not-disturb setting command for at least one peripheral device through the home map, the controller 170 can set the corresponding peripheral device to the do-not-disturb mode S30.

In this way, when the do-not-disturb mode is set, there is an advantage of minimizing the problem of users being disturbed by peripheral devices existing in the space where they are staying being controlled by other users.

Hereinafter, a method of setting the corresponding peripheral device to the do-not-disturb mode according to the do-not-disturb setting command will be described.

The controller 170 can receive a do-not-disturb setting command that sets at least one peripheral device displayed on the home map to the do-not-disturb mode. For example, when the controller 170 receives a touch input that presses and holds at least one peripheral device displayed on the home map for a specific period of time, the controller 170 can recognize that it has received a do-not-disturb setting command that sets the peripheral device corresponding to the touch input to the do-not-disturb mode. Alternatively, the controller 170 may recognize that the do-not-disturb setting command, which sets the corresponding peripheral device to the do-not-disturb mode, has been received by recognizing a voice command including at least one of the name of the space and the type of the device. That is, the controller 170 may receive the do-not-disturb setting command in various ways.

When the controller 170 receives the do-not-disturb setting command, the controller 170 may set the do-not-disturb mode so that the device corresponding to the do-not-disturb setting command is controlled only by the user who made the do-not-disturb setting command. Specifically, when the controller 170 receives the do-not-disturb setting command for the first peripheral device from the first user terminal, the controller 170 may set the first peripheral device to the do-not-disturb mode controlled only by the first user terminal. Therefore, in this case, the first peripheral device may be controlled only by the first user terminal and may not be controlled by a control command received from the second user terminal. Accordingly, the home map displayed on the first user terminal and the home map displayed on the second user terminal may be different. For example, the first peripheral device may be displayed with a controllable icon on the home map displayed on the first user terminal, and the first peripheral device may be displayed with an uncontrollable icon on the home map displayed on the second user terminal. Alternatively, the home map displayed on the display 180 when the first user terminal is near the display device 100 may be different from the home map displayed on the display 180 when the second user terminal is near the display device 100, which will be described in detail with reference to Figs. 14 to 16.

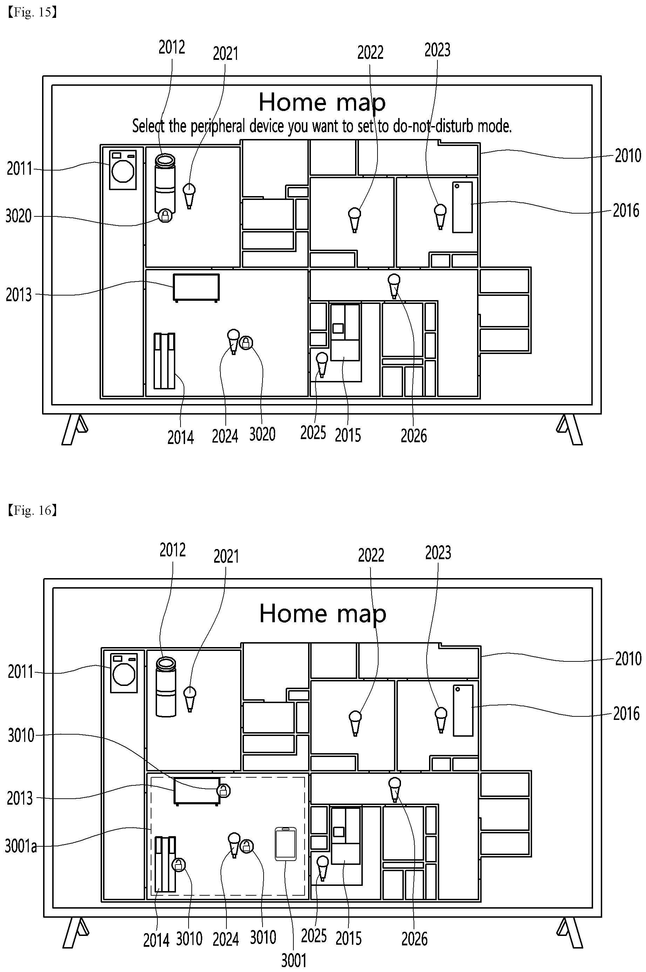

Fig. 14 is an example diagram showing a home map displayed when a display device of the present disclosure receives a do-not-disturb setting command from a first user terminal, and Fig. 15 is an example diagram showing a home map displayed to a second user when a do-not-disturb setting command is received by the first user terminal as shown in Fig. 14.

First, referring to Fig. 14, the controller 170 can receive a command from the first user terminal to set the first peripheral device 2012 and the second peripheral device 2024 to the do-not-disturb mode. In this state, the first user terminal can display a home map in which the first and second peripheral devices 2012 2024 are displayed together with a controllable icon 3010 as shown in Fig. 14. Meanwhile, the second user terminal may display a home map in which the first and second peripheral devices 2012 2024 are displayed together with an uncontrollable icon 3020, as shown in Fig. 15.

The controllable icon 3010 may be an icon indicating that remote control of the corresponding peripheral device is possible in the current state, but remote control is not possible for other users or other areas. The controllable icon 3010 may be an open lock shape, but this is only an example.

The uncontrollable icon 3020 may be an icon indicating that remote control of the corresponding peripheral device is not possible in the current state, and remote control is only possible for other users or other areas. The uncontrollable icon 3020 may be a closed lock shape, but this is only an example.

Fig. 16 is an example drawing showing a home map displayed when the display device of the present disclosure receives a do-not-disturb setting command through a voice command.

The controller 170 can receive a voice command to set the do-not-disturb mode through the microphone 175, the controller 170 can detect a user terminal when the voice command to set the do-not-disturb is received, and the controller 170 can set the first peripheral device positioned in the first area where the first user terminal is positioned to the do-not-disturb mode when the first user terminal is detected.

As explained through the example of Fig. 16, the controller 170 can detect a user terminal positioned nearby when the controller 170 receives a voice command to set the do-not-disturb, and accordingly, the controller 170 can detect the first user terminal 3001. In particular, when the controller 170 receives a voice command to set the do-not-disturb, the controller 170 can detect the first user terminal 3001 positioned closest to the display device 100.

When the controller 170 detects the first user terminal 3001, it can determine the area 3001a in which the first user terminal 3001 is positioned, and set the first peripheral device 2013 2014 2024 placed in the first area 3001a in which the first user terminal 3001 is positioned to the do-not-disturb mode.

According to one embodiment, the controller 170 can obtain a space (e.g., a living room) corresponding to the area in which the first user terminal 3001 exists on the floor plan, and set the peripheral device placed in the corresponding space to the do-not-disturb mode.

According to another embodiment, the controller 170 can set the peripheral device located at a predetermined distance from the first user terminal 3001 to the do-not-disturb mode.

As described above, when the controller 170 sets the first peripheral device 2013 2014 2024 positioned in the first area 3001a to the do-not-disturb mode through a voice command, the first peripheral device 2013 2014 2024 may be displayed with a controllable icon 3010 on a home map displayed on a user terminal positioned in the first area 3001a, and the first peripheral device 2013 2014 2024 may be displayed with an uncontrollable icon 3020 on a home map displayed on a user terminal positioned in a second area, other than the first area 3001a.

And, when the controller 170 detects the departure of the first user terminal 3001 from the first area 3001a while setting the first peripheral device 2013 2014 2024 disposed in the first area 3001a where the first user terminal 3001 exists to the do-not-disturb mode, the controller 170 can release the setting of the do-not-disturb mode for the first peripheral device 2013 2014 2024.

In summary, when the do-not-disturb mode is set by the first user terminal or the do-not-disturb mode is set in the first area, the controller 170 can display a controllable icon 3010 on the home map displayed in the first user terminal and the first area, and display an uncontrollable icon 3020 on the home map displayed in the second user terminal and the second area.

When the controller 170 sets or de-sets the do-not-disturb mode, it may transmit a notification signal notifying the change in the setting of the do-not-disturb mode to at least one of the display device 100 or the user terminal. Alternatively, when the controller 170 sets or de-sets the do-not-disturb mode, it may output information on the change in the setting of the do-not-disturb mode to the speaker 185 of the display device 100.

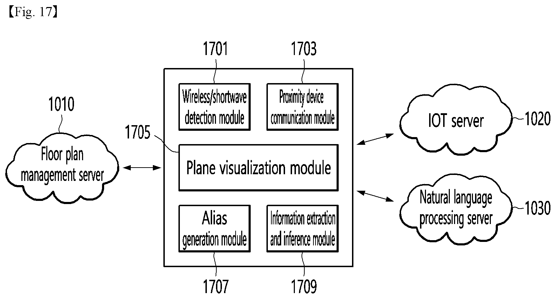

For the operation as described above, the controller 170 may be implemented with the configurations as shown in Fig. 17, but this is only an example and is not limited thereto.

Fig. 17 is a drawing illustrating an example of an implementation of a controller according to an embodiment of the present disclosure.

The controller 170 may include at least one of a wireless/shortwave detection module 1701, a proximity device communication module 1703, a plane visualization module 1705, an alias generation module 1707, and an information extraction and inference module 1709.

The wireless/shortwave detection module 1701 may be a module for detecting a peripheral device through ultra-wideband (UWB) communication and obtaining information about the peripheral device.

The proximity device communication module 1703 may be a module for obtaining information about the peripheral device or controlling the peripheral device through Bluetooth communication.

The plane visualization module 1705 may be a module that obtains a floor plan and places peripheral devices on the obtained floor plan to obtain a home map. The plane visualization module 1705 may communicate with the floor plan management server 1010. The floor plan management server 1010 may be the floor plan platform described in Fig. 7.

The alias generation module 1707 may be a module that obtains the name of each space on the floor plan.

The information extraction and inference module 1709 may be a module that obtains and analyzes data such as position movement of a user terminal to obtain the name of each space.

The controller 170 may communicate with the IOT server 1020 and the natural language processing server 1030. The IOT server 1020 may be a serve transmitting and receiving signals to operate peripheral devices according to control commands, can serve as a hub. The natural language processing server 1030 may be a server that performs voice analysis to determine the intent of a voice command when receiving a voice command and transmits the results of the voice analysis to the display device 100.

Meanwhile, Fig. 17 illustrates each module according to each operation in order to explain the operation of the display device 100 according to the present disclosure, but this is merely an example for the convenience of explanation, and thus it is reasonable that it is not limited thereto.

According to the present disclosure, different home maps may be displayed on the display device 100 or user terminals placed in each house depending on the structure of the house and the arrangement of the peripheral devices. In addition, according to the present disclosure, the space name on the home map may also be changed depending on the movement of the position of the peripheral device, the change in the position or time at which the user terminal stays, etc. In addition, according to the present disclosure, the space name on the floor plan home map or the position of the controllable icon (uncontrollable icon) may be changed depending on the movement of the position of the user terminal.

Meanwhile, in this specification, it is assumed that the device that serves as the standard for creating a home map and controlling peripheral devices is display device 100, but other home appliances other than display device 100 may serve as the standard for creating a home map and controlling peripheral devices.

According to an embodiment of the present disclosure, the above-described method may be implemented with codes readable by a processor on a medium in which a program is recorded. Examples of the medium readable by the processor include a ROM (Read Only Memory), a Random Access Memory (RAM), a CD-ROM, a magnetic tape, a floppy disk, an optical data storage device, and the like.

The display device as described above is not limited to the configuration and method of the above-described embodiments, but the embodiments may be configured by selectively combining all or part of each embodiment such that various modifications can be made.

## Claims

1. A display device, comprising:
a wireless communication interface configured to transmit and receive signals with at least one peripheral device;
a controller configured to obtain position information of the peripheral device, and
a display configured to display a home map in which peripheral devices are arranged on a floor plan based on the position information of the peripheral device,
wherein the controller is configured to:
when receiving a control command for at least one peripheral device displayed on the home map, transmit a control signal to the peripheral device to operate according to the control command.

2. The display device of claim 1, wherein the controller is configured to:
when receiving a do-not-disturb setting command for a first peripheral device from a first user terminal, set the first peripheral device to a do-not-disturb mode controlled only by the first user terminal.

3. The display device of claim 2, wherein the first peripheral device is displayed with a controllable icon on a home map displayed on the first user terminal, and
the first peripheral device is displayed with an uncontrollable icon on the home map displayed on a second user terminal.

4. The display device of claim 1, further comprising a microphone for obtaining a voice command for setting a do-not-disturb, and
the controller is configured to:
detect a user terminal when receiving the voice command for setting the do-not-disturb, and set a first peripheral device located in a first area where a first user terminal is located to a do-not-disturb mode when the first user terminal is detected.

5. The display device of claim 4, wherein the first peripheral device is displayed with a controllable icon on a home map displayed on the first user terminal and a user terminal located in the first area, and
the first peripheral device is displayed with an uncontrollable icon on a home map displayed on a user terminal located in a second area.

6. The display device of claim 4, wherein the controller is configured to:
release the do-not-disturb mode setting for the first peripheral device when detecting departure of the first user terminal from the first area.

7. The display device of claim 1, wherein the controller is configured to:
when a home address is entered, a floor plan corresponding to the entered home address is obtained, and
obtain the home map based on the floor plan corresponding to the obtained home address.

8. The display device of claim 1, wherein the controller is configured to:
display a plurality of floor plans, and
when receiving a command to select at least one of the displayed plurality of floor plans, obtain the home map based on the selected floor plan.

9. The display device of claim 1, wherein the controller is configured to:
obtain position information of the peripheral device through ultra-wideband (UWB) communication.

10. The display device of claim 9, wherein the controller is configured to:
detect a movement of a position of the peripheral device through the ultra-wideband communication, and
when the movement of the position of the peripheral device is detected, display the home map by changing the position of the peripheral device on the floor plan according to the detected movement of the position.

11. The display device of claim 1, wherein the controller is configured to:
receive an input that sets at least one of type or position of the peripheral device on the floor plan.

12. The display device of claim 1, wherein the controller is configured to:
obtain names of each space distinguished on the floor plan.

13. The display device of claim 12, wherein the controller is configured to:
change a name of the space based on a position movement of at least one user terminal.

14. The display device of claim 12, wherein the controller is configured to:
obtain a name of the space based on a time each of a plurality of user terminals stayed in each space distinguished on the floor plan.

15. The display device of claim 12, wherein the controller is configured to:
set a name of a first space to a name of a first user if a first user terminal stays in the first space for a predetermined time or longer, and,
if a control command including the name of the first user and a type of device is received, transmit a control signal to a peripheral device corresponding to the type of device placed in the first space.
